# EUROPÄISCHE PATENTSCHRIFT

(11) **EP 2 548 291 B1**
(45) Veröffentlichungstag und Bekanntmachung des Hinweises auf die Patenterteilung: **08.04.2020**
(21) Anmeldenummer: 11708703.1
(22) Anmeldetag: 25.02.2011
(51) Int. Cl.: H02K 5/173, H02K 21/22, H02K 15/02

(54) **AUSSENLÄUFERMOTOR**
EXTERNAL ROTOR MOTOR
MOTEUR À ROTOR EXTÉRIEUR

(30) Priorität: 15.03.2010 DE 202010003858 U
(43) Veröffentlichungstag der Anmeldung: 23.01.2013
(73) Patentinhaber: Ebm-Papst St. Georgen GmbH & CO. KG, 78112 St. Georgen (DE)
(72) Erfinder: ROJO LULIC, Francisco, 78112 St. Georgen (DE)
(74) Vertreter: Staeger & Sperling Partnerschaftsgesellschaft mbB
(86) Internationale Anmeldenummer: PCT/EP2011/000935
(87) Internationale Veröffentlichungsnummer: WO 2011/113522

(56) Entgegenhaltungen:
- WO-A1-2005/095802
- DE-A1- 10 052 039

## Beschreibung

Die Erfindung betrifft einen Außenläufermotor. Solche Motoren haben einen Innenstator, und um diesen herum ist gewöhnlich ein glockenförmiger Außenrotor angeordnet, der eine Welle hat, welche in einem Lagerrohr im Inneren des Innenstators gelagert ist. Hierfür gibt es verschiedene Lösungen.

Die WO2005/095802A1 zeigt einen elektronisch kommutierten Außenläufermotor mit einem Innenstator von konventioneller Bauweise, der auf einem Lagerrohr befestigt ist. Der Innenstator ist durch einen Luftspalt vom Außenrotor getrennt. Der Außenrotor hat eine Nabe in der eine Welle befestigt ist. Die Welle ist im Lagerrohr gelagert. Zwei Wälzlager sind in das Lagerrohr eingepresst, und ein Außenring des Wälzlagers auf der von der Nabe abgewandten Seite liegt gegen das obere Ende von Rippen an, die im Lagerrohr vorgesehen sind. Die Außenringe der Wälzlager sind durch ein Distanzstück im Abstand voneinander gehalten. Die Wälzlager werden durch ein Rastglied festgehalten, das sich in das Kunststoff-Material des Lagerrohrs eingräbt. Die Nabe hat auf ihrer dem Innenstator zugewandten Seite einen axialen Vorsprung, welcher beim Drücken auf das von der Nabe abgewandte Wälzlager zur Anlage gegen das Rastglied kommt.

Es ist eine Aufgabe der Erfindung, einen neuen Außenläufermotor bereit zu stellen.

Nach der Erfindung wird diese Aufgabe gelöst durch den Gegenstand des Anspruchs 1. Man erreicht so, dass die Wälzlager für die Welle des Außenrotors sowohl als Radial- wie als Axiallager wirksam sein können, so dass sich eine hohe Lebensdauer ergibt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: einen Längsschnitt durch das tragende Grundgerüst eines Außenläufermotors einschließlich seines Innenstators und seines Lüftergehäuses,
- Fig. 2: eine perspektivische Ansicht der Grundstruktur der Fig. 1, gesehen etwa in Richtung des Pfeiles II der Fig. 1,
- Fig. 3: eine Darstellung analog Fig. 1, wobei aber eine Leiterplatte montiert ist, auf der sich elektrische Bauteile des Motors befinden,
- Fig. 4: eine vergrößerte Darstellung der Einzelheit IV der Fig. 3,
- Fig. 5: eine Draufsicht, gesehen in Richtung des Pfeiles V der Fig. 3,

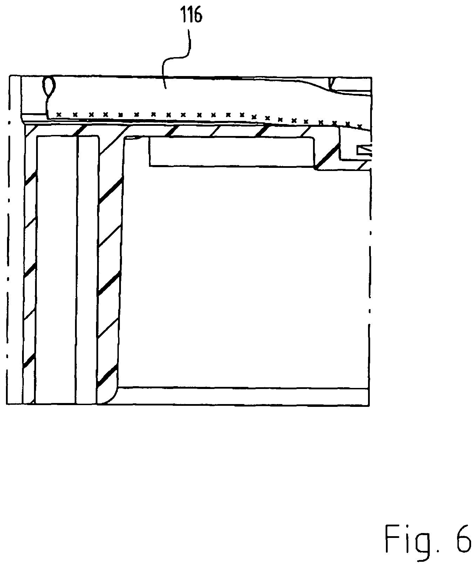

- Fig. 6: einen Schnitt, gesehen in Richtung der Linie VI-VI der Fig. 5,

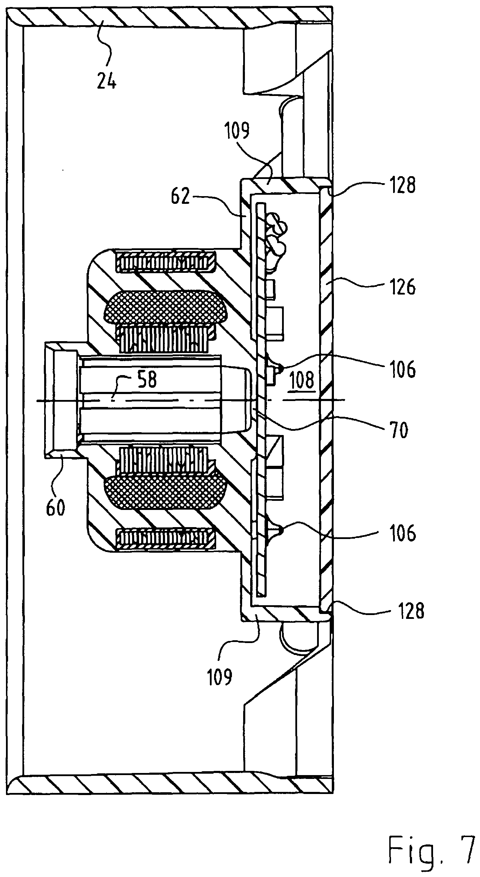

- Fig. 7: eine Darstellung analog Fig. 3, aber in verschlossenem Zustand,
- Fig. 8: eine Variante zu Fig. 7,
- Fig. 9: eine Darstellung analog Fig. 7, bei der Montage des permanentmagnetischen Rotors,
- Fig. 10: eine Schnittdarstellung des Motors der Fig. 9 im montierten Zustand, gesehen längs der Linie X-X der Fig. 12,
- Fig. 11: eine Vergrößerung der Einzelheit XI der Fig. 10, bei der zusätzlich ein Montagewerkzeug angedeutet ist,
- Fig. 12: eine Draufsicht, gesehen längs des Pfeiles XII der Fig. 10,
- Fig. 13: identische ausgeprägte Pole 140, 142, 144, 146 und einen magnetischen Rückschluss 148, innerhalb dessen sich - beim fertigen Lüfter - das Lagerrohr 56 (Fig. 1) befindet.
- Fig. 14: eine Schnittdarstellung eines Kontaktstifts, der zum Anschluss des Innenstators an eine Leiterplatte dient.

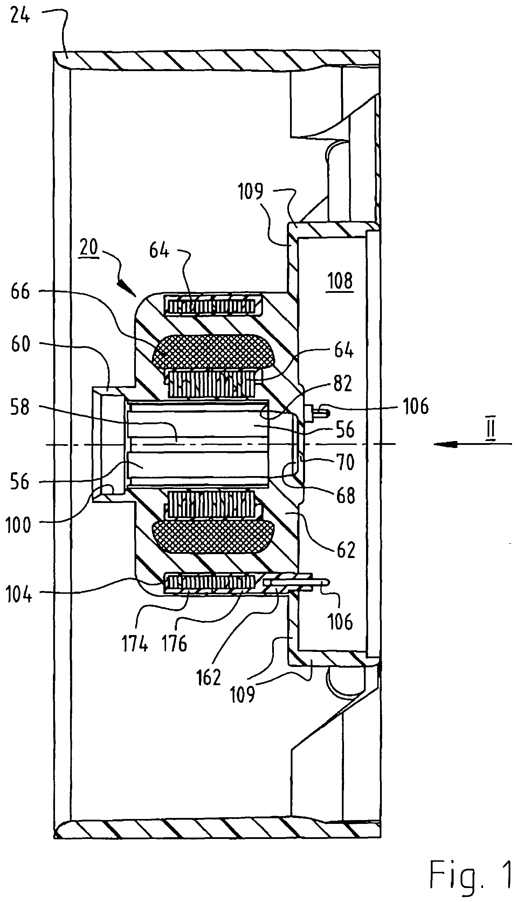

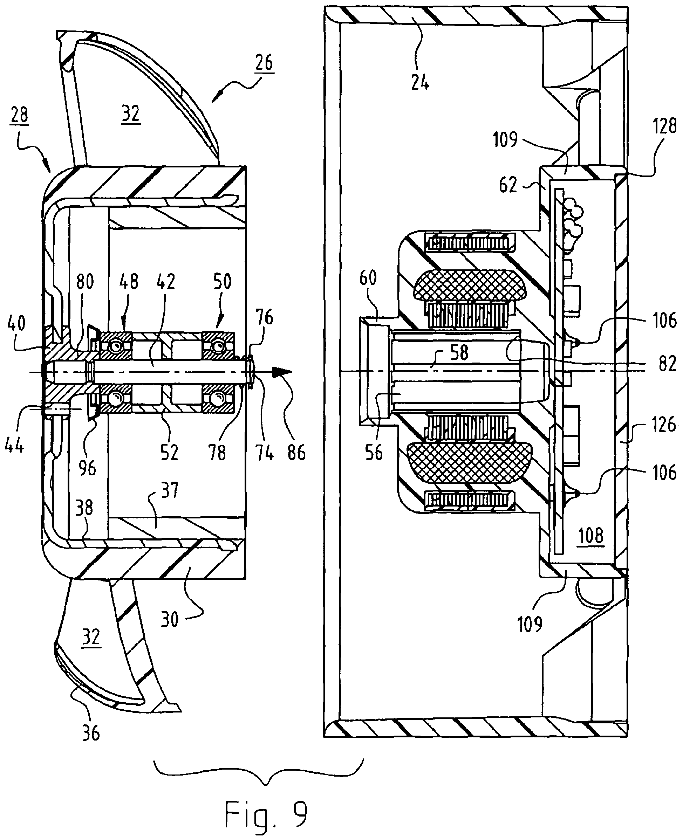

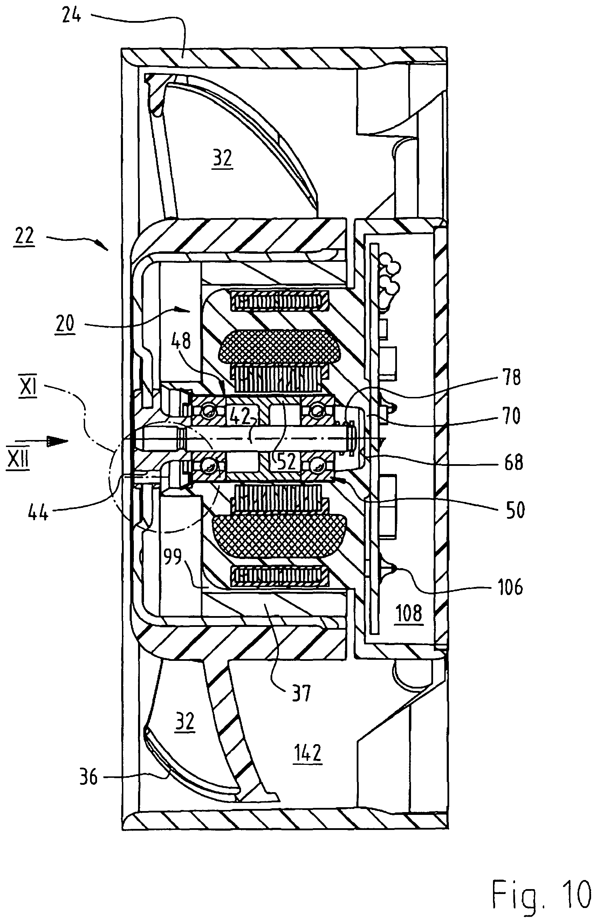

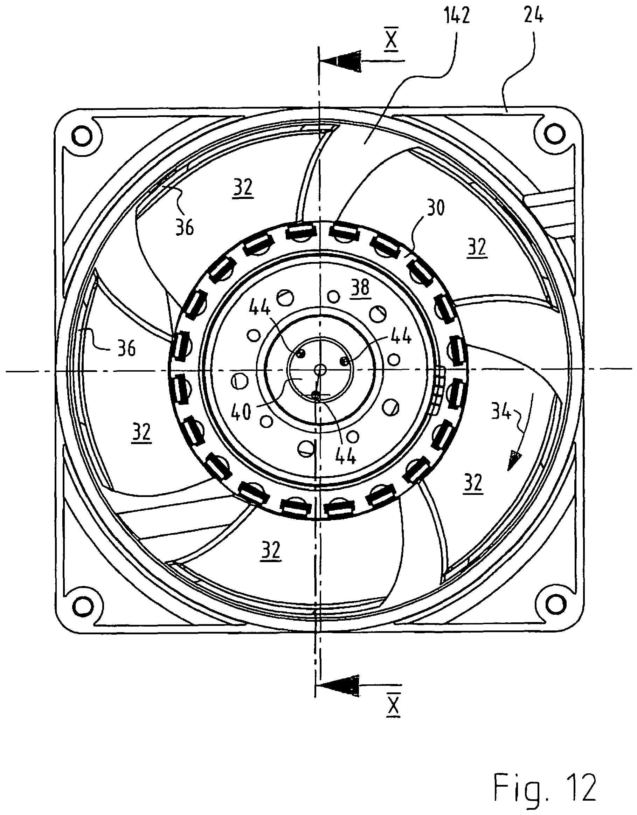

**Fig. 1** zeigt einen Längsschnitt durch den Innenstator 20 eines in Fig. 10 dargestellten Außenläufermotors 22 und seines Lüftergehäuses 24, in welchem sich im Betrieb ein Lüfterrad 26 (Fig. 9) dreht. Letzteres wird gebildet von einem Außenrotor 28, auf dessen Außenumfang 30 Lüfterflügel 32 ausgebildet sind. Die Drehrichtung des Außenrotors 28 ist in Fig. 12 mit 34 bezeichnet.

Bevorzugt hat jeder Lüfterflügel 32 an seiner äußeren Peripherie eine Verbreiterung 36, um den Wirkungsgrad des Lüfterrads 26 zu verbessern.

Wie **Fig. 9** zeigt hat der Außenrotor 28 einen topfförmigen magnetischen Rückschluss 38 aus Weicheisen, und dieser ist in seinem Zentrum mit einer Nabe 40 verbunden, in der eine Welle 42 in der dargestellten Weise befestigt ist. Die Nabe 40 hat Durchbrechungen 44, die bei der Montage des Lüfters Verwendung finden und deren Funktion nachfolgend näher erläutert wird.

Die Welle 42 hat zu ihrer Lagerung zwei Wälzlager, nämlich ein erstes Wälzlager 48 auf der dem Rotor 28 zugewandten Seite der Welle 42, und ein zweites Wälzlager 50 auf der vom Rotor 28 abgewandten Seite der Welle 42. Zwischen den Außenringen der Wälzlager 48, 50 befindet sich ein Distanzglied 52, vgl. Fig. 9. Dieses ist auf der Welle 42 geführt.

Zur Aufnahme der Wälzlager 48, 50 und des Distanzglieds 52 dient ein Lagerrohr 56, das in Fig. 1 dargestellt ist. Auf seinem Innenumfang hat es Längsrippen 58, deren radial innere Enden eine kreisförmige Hüllkurve definieren. In den Rippen 58 sind die Außenringe der beiden Wälzlager 48, 50 geführt.

Das Lagerrohr 56 geht nach links über in einen Kragen 60, vgl. Fig. 1. Es geht ferner über in eine teilweise isolierende Umhüllung 62 des Innenstators 20, dessen in üblicher Weise packetiertes Statorblechpaket mit 64 und dessen Wicklungsanordnung mit 66 bezeichnet ist.

In dieser Umhüllung 62 ist in Fortsetzung des Lagerrohres 56 eine napfartige Ausnehmung 68 vorgesehen, deren Boden 70 das Lagerrohr 56 an dieser Stelle flüssigkeitsdicht verschließt.

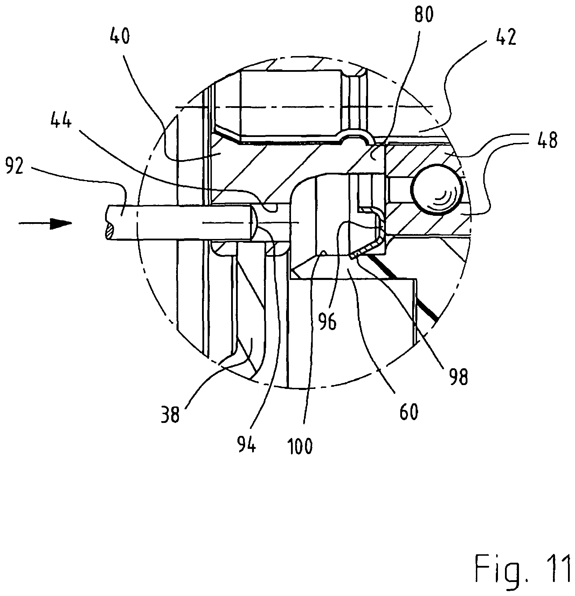

Wie **Fig. 10** zeigt, bildet der Boden 70 einen axialen Toleranzbereich für das freie Ende 74 (Fig. 9) der Welle 42, d.h. das freie Ende 74 liegt nicht gegen den Boden 70 an. Im Bereich des freien Endes 74 ist ein Sprengring 76 in einer Nut der Welle 42 vorgesehen, und zwischen diesem Sprengring 76 und dem Innenring des Wälzlagers 50 ist eine Druckfeder 78 vorgesehen, welche die Innenringe der Wälzlager 48, 50 gegen einander verspannt, da ein Vorsprung 80 (Fig. 11) der Nabe 40, welch letztere mit der Welle 42 fest verbunden ist, gegen den Innenring des Wälzlagers 48 anliegt, während in Fig. 9 die Feder 78 den Innenring des Wälzlagers 50 nach links drückt, so dass die Innenringe der Wälzlager 48, 50 gegeneinander verspannt werden.

Wie Fig. 10 zeigt, liegt der Außenring des Wälzlagers 50 gegen eine Schulter 82 (Fig. 1) des Lagerrohres 56 an und ist in dieser Stellung fixiert. Der Innenring des Wälzlagers 48 ist verschiebbar (Loslager) auf der Welle 42 angeordnet, so dass letztere in Fig. 10 nach rechts gepresst wird. Auf diese Weise können die beiden Wälzlager 48, 50 sowohl ein Radial- wie ein Axiallager für den Außenrotor 28 bilden.

Wie Fig. 9 zeigt, werden die beiden Wälzlager 48, 50 in Richtung eines Pfeiles 86 in die Längsrippen 58 des Lagerrohres 56 eingepresst. Dies geschieht mit Hilfe von Stiften 92, welche durch die Durchbrechungen 44 der Nabe 40 durchgesteckt werden. Fig. 11 zeigt nur einen dieser Stifte 92, die bei der Montage mit ihrem in Fig. 11 rechten Ende 94 gegen ein Befestigungsglied 96 anliegen und dieses gegen den Außenring des Wälzlagers 48 pressen, wobei durch das Distanzglied 52 (Fig. 9) auch der Außenring des Wälzlagers 50 nach rechts verschoben und zur Anlage gegen die Schulter 82 des Lagerrohres 56 gebracht wird. Auf diese Weise werden die Außenringe beider Wälzlager 48, 50 im Lagerrohr 56 fixiert.

Das Befestigungsglied 96 wird dadurch im Kragen 60 in der erreichten Stellung fixiert, da es mit seinem scharfen, frustokonischen Rand 98 (Fig. 11) in die Innenseite 100 des Kragens 60 einschneidet und sich deshalb in Fig. 11 nicht mehr nach links verschieben kann. Auf diese Weise erreicht man eine sichere und spielfreie Montage der Wälzlager 48, 50 im Lagerrohr 56, und das Befestigungsglied 96 bewirkt eine Verkrallung und Kippsicherung für die Wälzlager 48 und 50.

Wie Fig. 10 zeigt, befindet sich zwischen dem Innnenrotor 20 und dem Magneten 37 des Rotors 28 ein magnetisch wirksamer Luftspalt 99.

Der Innenstator 20 wird beim Spritzgießvorgang voll mit einem Kunststoff 62 umhüllt. Als Kunststoffe eignen sich u. a.:
Polyamide, z.B. Ultramid® A3X2G5 oder Polyamid 66
PBT, z.B. Technyl (PBT-G20FR)
Diese Kunststoffe können mit Fasern verstärkt werden, z. B. mit etwa 20 % bis etwa 25 % Glasfüllstoffen. Diese Stoffe können verschweißt werden, z. B. durch Ultraschallschweißen oder durch Laserschweißen. Alternativ sind Klebeverbindungen, Dichtungen oder Dichtelemente möglich, z.B. in Form von 2K-Kunststoffteilen.

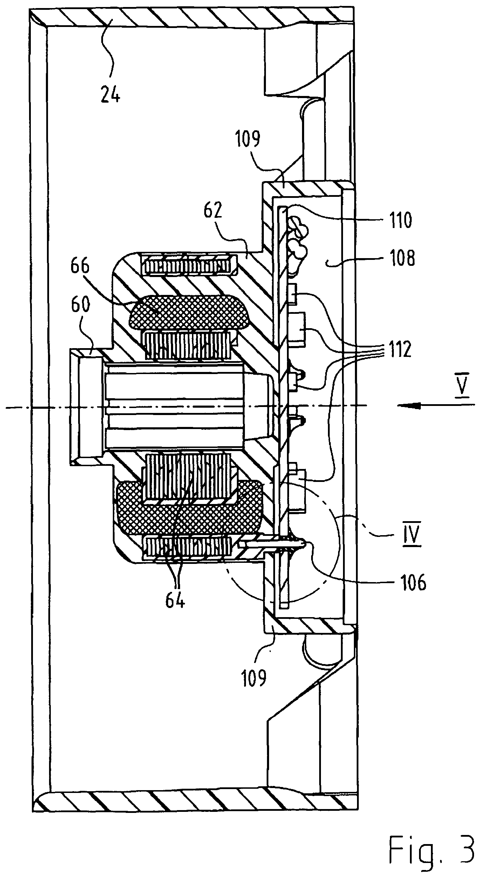

Wie z. B. die Fig. 1 und 3 zeigen, hat das Statorblechpaket 64 eine Nutisolation 104, welche einen Spulenkörper bildet, in den die Statorwicklungsanordnung 66 gewickelt ist, deren Form und Aufbau von der Verwendung des Motors abhängt und die deshalb nur schematisch dargestellt ist.

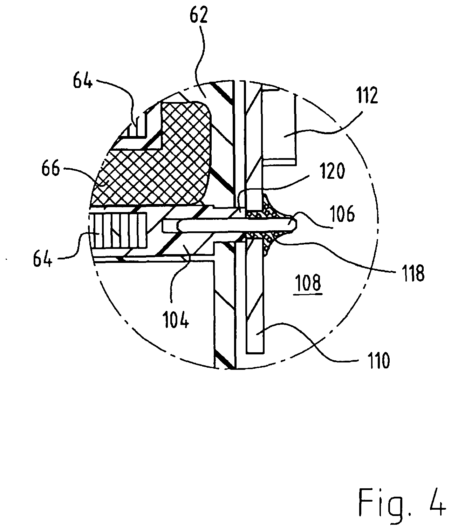

Wie Fig. 4 zeigt, sind in dieser Nutisolation 104 Kontaktstifte 106 befestigt, die in Fig. 4 nach rechts ragen. (Fig. 4 zeigt nur einen dieser Kontaktstifte.) An diesen Kontaktstiften 106 kann ein Ende eines Drahtes 154 der Statorwicklungsanordnung 66 elektrisch und mechanisch befestigt werden. Am Innenstator 20 sind bei diesem Ausführungsbeispiel insgesamt vier solche Stifte 106 vorgesehen.

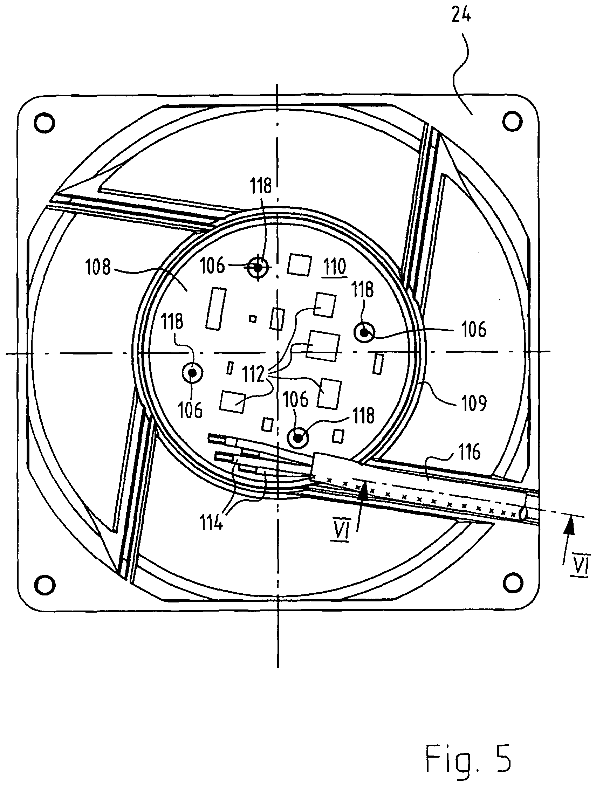

Die Stifte 106 ragen bei Fig. 1 und folgende in einen Hohlraum 108, dessen Seitenwand mit 109 bezeichnet ist und in dem sich gemäß Fig. 3 eine Leiterplatte 110 befindet, auf der elektrische Bauteile 112 für den Motor 20 angeordnet sind. Wie Fig. 5 zeigt, sind an die Leiterplatte 110 Litzen 114 eines Anschlusskabels 116·angeschlossen. Auch sind an Leiterbahnen der Leiterplatte 110 die Stifte 106 durch Lötverbindungen 118 angelötet, vgl. Fig. 4. Die Leiterplatte 110 wird durch Distanzglieder 120 (Fig. 4) im Abstand von der Kunststoff-Umhüllung 62 gehalten, welch letztere auch den Boden und die Seitenwand 109 des Hohlraums 108 bildet.

Nach der Bestückung mit der Leiterplatte 110 und nach dem Anschluss der Litzen 114 (Fig.5) wird der Hohlraum 108 durch einen Deckel 126 verschlossen. Dieser kann z. B. durch Ultraschall an Schweißfugen 128 mit der Seitenwand 109 verschweißt werden, oder durch eine Klebeverbindung.

Besonders vorteilhaft ist hier, dass die Leiterplatte 110 mit den elektrischen Bauteilen 112 in einem Hohlraum 108 angeordnet ist, so dass die Bauteile 112 nicht mit Kunststoff umspritzt werden, was durch die Volumenänderung beim Erstarren des Umgussmaterials bewirken könnte, dass die Bauteile 112 von der Leiterplatte 110 abgerissen werden. Diese Gefahr besteht hier nicht. Jedoch ist es auch nicht ausgeschlossen, in manchen Fällen Bauteile 112 mit Kunststoff zu umspritzen ooder mit einem Schutzlack zu versehen.

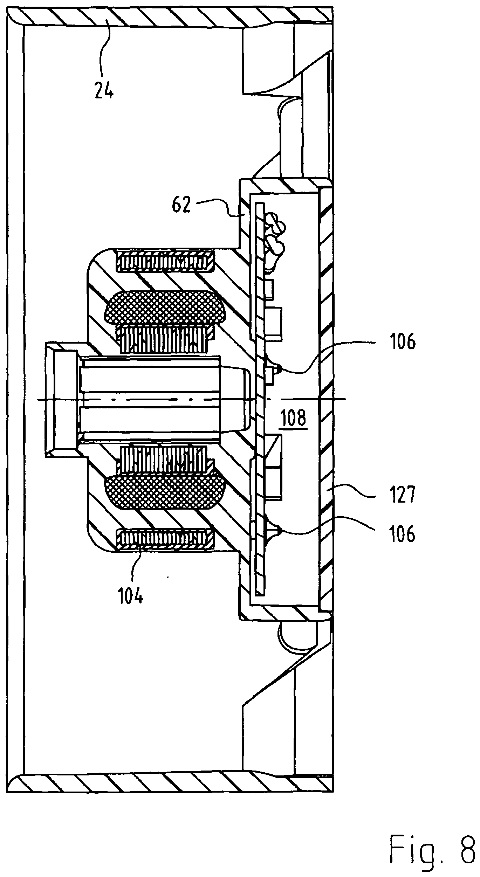

Statt eines Deckels 126 kann auch eine Verschlusskappe 127 verwendet werden, wie das beispielhaft in Fig. 8 dargestellt ist. Die Verschlusskappe 127 kann z.B. durch Schweißen oder Kleben befestigt werden.

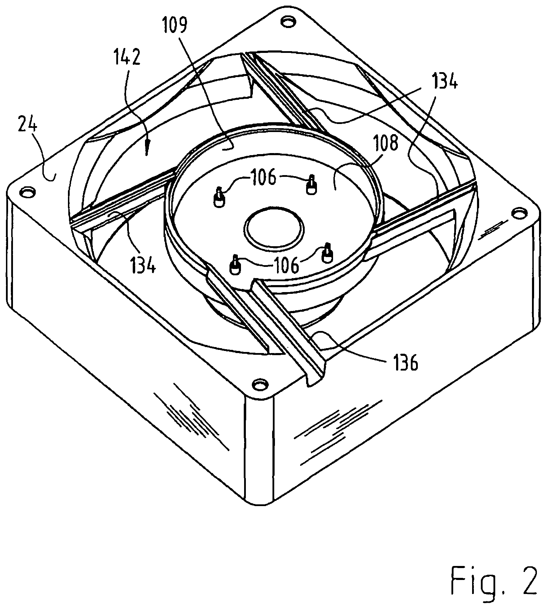

Wie Fig. 2 zeigt, ist die Wand 109 des Hohlraums 108 über drei einfache Speichen 134 und eine rinnenförmige Speiche 136 mit dem Lüftergehäuse 24 verbunden, das eine Luftdurchtrittsöffnung 142 nach Art eines Venturikanals bildet. Die Speiche 136 dient zur Führung des Kabels 116, vgl. Fig. 5. Das Kabel 116 ist durch eine (nicht sichtbare) Gummidichtung abgedichtet.

Das Lüftergehäuse 24 ist also durch die Speichen 134, 136 einstückig mit einem Teil der Wand des Hohlraums 108 und einstückig mit der Umhüllung des Innenstators 20 ausgebildet, so dass alle diese Teile in einem einzigen Arbeitsgang hergestellt werden können, was die Produktion vereinfacht und beschleunigt und zudem Kosten reduziert. Da auch die Montage des Rotors 28 stark vereinfacht ist, ergibt sich ein preiswertes Produkt mit hervorragenden Eigenschaften und hoher Lebensdauer.

In Fig. 9 ist bei 37 der Permanentmagnet des Rotors 28 dargestellt, der im magnetischen Rückschluss 38 befestigt ist. Seine Magnetisierung kann zweipolig, vierpolig, sechspolig etc. ausgeführt sein.

Fig. 10 zeigt, wie die Flügel 32 in den Venturikanal 142 ragen.

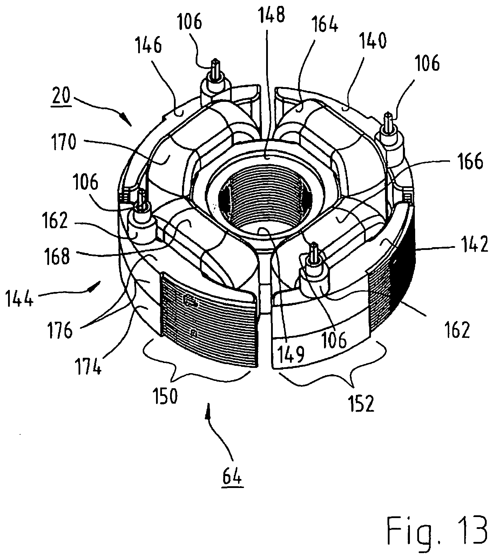

Fig. 13 zeigt eine raumbildliche Darstellung eines fertig bewickelten Innenstators 20, der sozusagen als Vorprodukt bei der Herstellung eines Motors bzw. Lüfters dient. Sein Statorblechpaket 64 hat bei diesem Beispiel vier identische ausgeprägte Pole 140, 142, 144, 146, und einen magnetischen Rückschluss 148 mit einer zentralen Ausnehmung 149, innerhalb deren sich - beim fertigen Lüfter - das Lagerrohr 56 (Fig. 1) mit seinen Längsrippen 158 befindet.

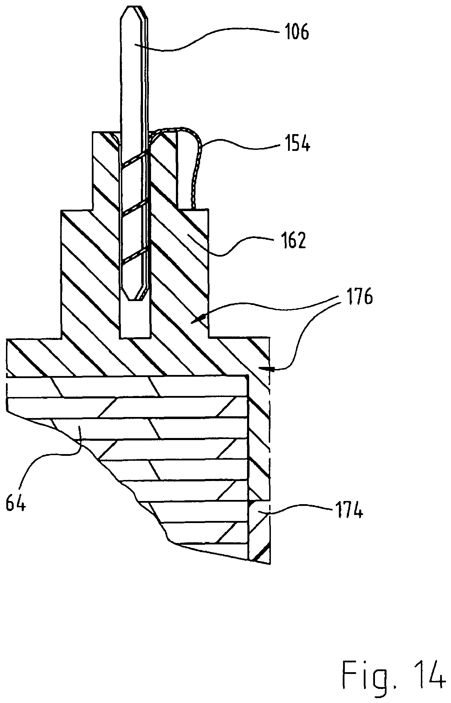

Die Pole 140 bis 146 haben bei diesem Ausführungsbeispiel auf ihrer dem Luftspalt 99 (Fig. 10) zugewandten Seite unterschiedliche Außendurchmesser. Ein Abschnitt 150 mit größerem Durchmesser ist in diesem Zustand noch nicht von Kunststoff bedeckt. Ein Abschnitt 152 mit kleinerem Durchmesser ist hier mit einer Isolation aus zwei aufgesteckten Halbschalen 174, 176 bedeckt. Für diese Bedeckung des Innenstators gibt es verschiedene Möglichkeiten, die aus dem Stand der Technik bekannt sind, z.B. wie dargestellt die Verwendung der beiden Halbschalen 174, 176, oder eine Umspritzung mit Isolationsmaterial, oder die Verwendung eines isolierenden Spezialpapiers. An der oberen Halbschale 176 sind auch die Kontaktstifte 106 angebracht, die z.B. in Fig. 1 bis 5 dargestellt sind. Fig. 14 zeigt, wie ein Wicklungsdraht 154 an dem Stift 106 befestigt ist. Letzterer ist hierzu in einem Vorsprung 162 der Halbschale 176 befestigt, und dieser Vorsprung dient auch als Distanzglied für die Leiterplatte 110, vgl. die Fig. 3 oder 4.

Auf den Statorpolen 140 bis 146 befinden sich bei diesem Beispiel konzentrierte Wicklungen 164, 166, 168, 170, deren Anschlüsse in der üblichen Weise mit den Kontaktstiften 106 verbunden sind. Naturgemäß wäre ebenso die Verwendung einer verteilten Wicklung und eines entsprechenden Blechpakets möglich.

Wie z.B. Fig. 1 zeigt, wird der bewickelte Innenstator 20 allseits mit einem Kunststoff 62 umspritzt, also auch an den Abschnitten 150 des Statorblechpakets 64, wobei dort nur eine dünne Insolationsschicht von z.B. 0,4 mm Dicke erzeugt wird.

Wie Fig. 1 zeigt, werden beim Umspritzen die Hohlräume des Innenstators 20 ausgefüllt, das Lagerrohr 56, 58 mit seinem Kragen 60 wird erzeugt, ferner die Wand 109 des Hohlraums 108 und die Speichen 134, 136, und schließlich auch das Lüftergehäuse 24, so dass man einen Lüfter sozusagen "aus einem Guss" erhält.

Nach der weiteren Montage (Leiterplatte 110, Anschlusskabel 116 (Fig. 5)) etc. wird der Außenrotor 28 so montiert, wie das in Fig. 9 dargestellt und dort auch beschrieben ist, und es wird schließlich ein Typenschild angebracht, etc.

Naturgemäß ist die Zahl der Stator- und Rotorpole, ihre Form etc. eine Funktion der gewünschten Eigenschaften des Motors, wie das dem Fachmann des Elektromaschinenbaus bekannt ist. In manchen Fällen kann z.B. das Statorblechpaket 64 auf der Luftspaltseite überhaupt nicht mit Kunststoff bedeckt sein, oder nur an einem kleineren Bereich, oder man verwendet eine sehr dünne Kunststoffschicht.

Der Schutzbereich ist durch die Ansprüche bestimmt.

## Patentansprüche

1. Elektronisch kommutierter Außenläufermotor, welcher aufweist:
Einen Innenstator (20) mit einem Statorblechpaket (64), einer diesem zugeordneten Wicklungsanordnung (66), und einer zentralen Ausnehmung (149) des Statorblechpakets (64), in welcher ein Lagerrohr (56) angeordnet ist,
einen vom Statorblechpaket (64) durch einen magnetisch wirksamen Luftspalt (99) getrennten permanentmagnetischen Außenrotor (28), welcher eine Nabe (40) und eine mit der Nabe (40) fest verbundene Welle (42) hat, die in dem Lagerrohr (56) gelagert ist;
zwei im Lagerrohr (56) im Abstand voneinander angeordnete Wälzlager (48, 50), nämlich ein erstes Wälzlager (48) auf einer der Nabe (40) zugewandten Seite, und ein zweites Wälzlager (50) auf einer von der Nabe (40) abgewandten Seite, bei welch letzterem ein Außenring mit einer Seite an einer im Lagerrohr (56) vorgesehenen Schulter (82) abgestützt ist,
und dieser Außenring mit seiner anderen Seite über ein Distanzglied (52) gegen eine gegenüberliegende Seite des Außenrings des ersten Wälzlagers (48) abgestützt ist, welcher Außenring seinerseits durch ein Halteglied (96) am Lagerrohr (56) abgestützt ist,
**dadurch gekennzeichnet, dass** die Nabe (40) auf ihrer dem Innenstator (20) zugewandten Seite mit einem axialen Vorsprung (80) versehen ist, der zur Anlage gegen den Innenring eines benachbarten Wälzlagers (48) ausgebildet ist.

2. Motor nach Anspruch 1, bei welchem das Lagerrohr (56) auf seiner von der Nabe (40) abgewandten Seite durch einen flüssigkeitsdichten Verschluss (70) verschlossen ist.

3. Motor nach Anspruch 1 oder 2, dessen Außenrotor (28) mit mindestens einer Öffnung (44) versehen ist, welche das Einführen eines Werkzeugs (92) ermöglicht, mittels dessen das Halteglied (56) zur Anlage gegen den Außenring des zugeordneten Wälzlagers (48) verschoben werden kann.

4. Motor nach einem der vorhergehenden Ansprüche, bei welchem das Lagerrohr (96) auf seiner der Nabe (40) zugeordneten Seite mit einem Kragen (60) versehen ist, in welchen das Halteglied (96) eingreift, um die Außenringe der Wälzlager (48, 50) im Lagerrohr (56) festzuhalten.

5. Motor nach Anspruch 3 oder 4, bei welchem das Halteglied (96) einen Rand (98) aufweist, der in Richtung zum Außenrotor (28) zeigt und mit dem Kragen (60) des Lagerrohres (56) in Eingriff steht.

6. Motor nach einem der vorhergehenden Ansprüche, dessen Welle (42) ein freies Ende (74) aufweist, und bei welchem zwischen dem Innenring des zweiten Wälzlagers (50) und diesem freien Ende (74) eine Kraft (78) wirksam ist, welche bestrebt ist, diesen Innenring in Richtung zur Nabe (40) zu beaufschlagen.

## Claims

1. An electronically commutated external rotor motor, having:
an internal stator (20) with a laminated stator core (64), a winding arrangement (66) associated therewith, and a central recess (149) of the laminated stator core (64), in which a bearing tube (56) is arranged,
a permanent-magnet external rotor (28) separated from the laminated stator core (64) by a magnetically effective air gap (99), the rotor having a hub (40) and a shaft (42) fixedly connected to the hub (40) and supported in the bearing tube (56);
two rolling bearings (48, 50) arranged at a distance from one another in the bearing tube (56), namely a first rolling bearing (48) on a side facing towards the hub (40), and a second rolling bearing (50) on a side facing away from the hub (40), the latter having an outer ring supported with one side on a shoulder (82) provided in the bearing tube (56),
and this outer ring being supported with its other side by means of a spacing member (52) against an opposite side of the outer ring of the first rolling bearing (48), wherein the outer ring in turn is supported by a retaining member (96) on the bearing tube (56),
**characterized in that**
the hub (40) is provided with an axial projection (80) on its side facing towards the internal stator (20), the axial projection being formed such as to abut against the inner ring of an adjacent rolling bearing (48).

2. The motor according to claim 1, wherein the bearing tube (56) is closed off by a liquid-tight seal (70) on its side facing away from the hub (40).

3. The motor according to claim 1 or 2, the external rotor (28) of which is provided with at least one opening (44) that enables the introduction of a tool (92) by means of which the retaining member (56) can be displaced into abutment against the outer ring of the associated rolling bearing (48).

4. The motor according to any one of the preceding claims, wherein the bearing tube (96) is provided with a collar (60) on its side associated with the hub (40), which collar the retaining member (96) engages to retain the outer rings of the rolling bearings (48, 50) in the bearing tube (56).

5. The motor according to claim 3 or 4, wherein the retaining member (96) has an edge (98) which points in the direction of the external rotor (28) and is in engagement with the collar (60) of the bearing tube (56).

6. The motor according to any one of the preceding claims, the shaft (42) of which has a free end (74), and wherein, between the inner ring of the second rolling bearing (50) and said free end (74), a force (78) is effective which tends to act on said inner ring in the direction of the hub (40).

## Revendications

1. Moteur à rotor extérieur commuté électroniquement, lequel présente :
un stator intérieur (20) avec un empilage de tôles de stator (64), un agencement d'enroulement (66) associé à celui-ci et un évidement central (149) de l'empilage de tôles de stator (64), dans lequel un tube palier (56) est agencé,
un rotor extérieur à aimant permanent (28) séparé de l'empilage de tôles de stator (64) par un entrefer (99) magnétiquement efficace, lequel a un moyeu (40) et un arbre (42) relié fixement au moyeu (40), qui est logé dans le tube palier (56) ;
deux paliers à roulement (48, 50) agencés à distance l'un de l'autre dans le tube palier (56), à savoir un premier palier à roulement (48) sur un côté tourné vers le moyeu (40), et un deuxième palier à roulement (50) sur un côté opposé au moyeu (40), dans lequel dernier une bague extérieure est soutenue avec un côté sur un épaulement (82) prévu dans le tube palier (56),
et cette bague extérieure est soutenue avec son autre côté par le biais d'un organe d'écartement (52) contre un côté opposé de la bague extérieure du premier palier à roulement (48), laquelle bague extérieure est soutenue de son côté par un organe de retenue (96) sur le tube palier (56),
**caractérisé en ce que**
le moyeu (40) est doté sur son côté tourné vers le stator intérieur (20) d'une saillie axiale (80), qui est réalisée pour l'appui contre la bague intérieure d'un palier à roulement (48) adjacent.

2. Moteur selon la revendication 1, dans lequel le tube palier (56) est fermé sur son côté opposé au moyeu (40) par une fermeture étanche aux fluides (70).

3. Moteur selon la revendication 1 ou 2, dont le rotor extérieur (28) est doté d'au moins une ouverture (44), laquelle permet l'introduction d'un outil (92), au moyen duquel l'organe de retenue (56) peut être décalé pour l'appui contre la bague extérieure du palier à roulement (48) associé.

4. Moteur selon l'une quelconque des revendications précédentes, dans lequel le tube palier (96) est doté sur son côté associé au moyeu (40) d'un col (60), dans lequel l'organe de retenue (96) vient en prise pour retenir les bagues extérieures des paliers à roulement (48, 50) dans le tube palier (56).

5. Moteur selon la revendication 3 ou 4, dans lequel l'organe de retenue (96) présente un bord (98), qui pointe en direction du rotor extérieur (28) et est en prise avec le col (60) du tube palier (56).

6. Moteur selon l'une quelconque des revendications précédentes, dont l'arbre (42) présente une extrémité libre (74), et dans lequel une force (78) est active entre la bague intérieure du deuxième palier à roulement (50) et cette extrémité libre (74), laquelle vise à solliciter cette bague intérieure en direction du moyeu (40).
